(19) Europäisches Patentamt
European Patent Office
Office européen des brevets

(11) **EP 4 679 135 A1**

(12) **EUROPEAN PATENT APPLICATION**

(43) Date of publication:
**14.01.2026 Bulletin 2026/03**

(21) Application number: **24187987.3**

(22) Date of filing: **11.07.2024**

(51) International Patent Classification (IPC):
**G01S 7/497** (2006.01)   **G01S 17/86** (2020.01)
**G01S 17/931** (2020.01)   **G06N 5/00** (2023.01)

(52) Cooperative Patent Classification (CPC):
**G01S 7/4972; G01S 17/86; G01S 17/931;**
G06N 5/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **dSPACE GmbH**
**33102 Paderborn (DE)**

(72) Inventors:
• **Roy, Guillaume**
**76227 Karlsruhe (DE)**
• **Romanski, Simon**
**76131 Karlsruhe (DE)**
• **Hanselmann, Harald**
**76227 Karlsruhe (DE)**

(54) **METHOD AND COMPUTER SYSTEM FOR CALIBRATING RELATIVE SENSOR ORIENTATIONS**

(57)   A computer-implemented method for calibrating the relative orientation of a spatial sensor and an area sensor with overlapping measuring zones comprises receiving a plurality of sensor frames of the spatial sensor and the area sensor, grouping sensor frames of the space sensor with sensor frames of the area sensor based on temporal correlation, selecting at least one group of frames comprising a spatial sensor frame and an area sensor frame, receiving annotations for the at least one selected group, wherein the annotations comprise bounding boxes for detected objects, projecting the corners of a three-dimensional bounding box in the spatial sensor frame to an image plane of the area sensor, to produce a projected rectangle, calculating an energy term based on the coordinates of the corners of the projected rectangle and the corresponding bounding box in the area sensor frame, and optimizing the relative sensor orientation by minimizing the energy term.

Fig. 4

**Description**

The present invention relates to methods and computer systems for automatically annotating sensor data frames, in particular data frames from image acquisition sensors.

Advances in autonomous driving require large amounts of sufficiently diverse training data as well as validation data (i.e. independent ground truth data). The preparation of training data typically starts with the recording of many different driving scenarios by a vehicle equipped with a set of sensors, in particular imaging sensors, such as one or more cameras, a lidar sensor and/or a radar sensor. Before using these recorded scenarios as training data, they need to be annotated. The exact annotations required (e.g. the object classes to be distinguished) depend on each project and are specified in the detailed labeling specification. Larger annotation projects that would provide enough ground truth data to validate an autonomous vehicle, for example, require automation of the annotation process.

Automation approaches use neural networks to label the recorded sensor data. An initial set of received data is labeled manually and then used to train neural networks. Once sufficiently trained, the neural networks can annotate the bulk of the recorded image acquisition sensor data. Compared to a purely manual approach, this reduces the effort considerably. However, maintaining a high annotation quality still requires time-consuming quality checks by humans.

WO 2023/135244 A1 discloses a method and system for automatically annotating sensor data frames using a neural network. Data points, such as coordinates of bounding boxes or properties of detected objects, are assigned to the sensor data frames. State attributes are assigned to the data points, which describe, for example, environmental conditions during the recording of the sensor data frame. Based on the state attributes, the data points are grouped in order to take into account correlations between state attributes and the accuracy of the annotations. A first sample of one or more data points is selected from a first group, and a quality measure is determined for the data points in the first sample. If the quality measure of the first sample is below a predefined threshold, a manual correction must be made. After receiving corrected annotations for the data points in the first sample, the neural network is retrained on the basis of the data points in the first sample. A review of further samples, manual correction and retraining of the neural network can be repeated until the quality measure of a sample exceeds the predefined threshold. The method makes it possible to identify state attributes that have a negative impact on the annotation quality and to improve the neural network under these conditions by selective retraining. In this way, high annotation quality can be ensured with a reduced number of manual quality checks.

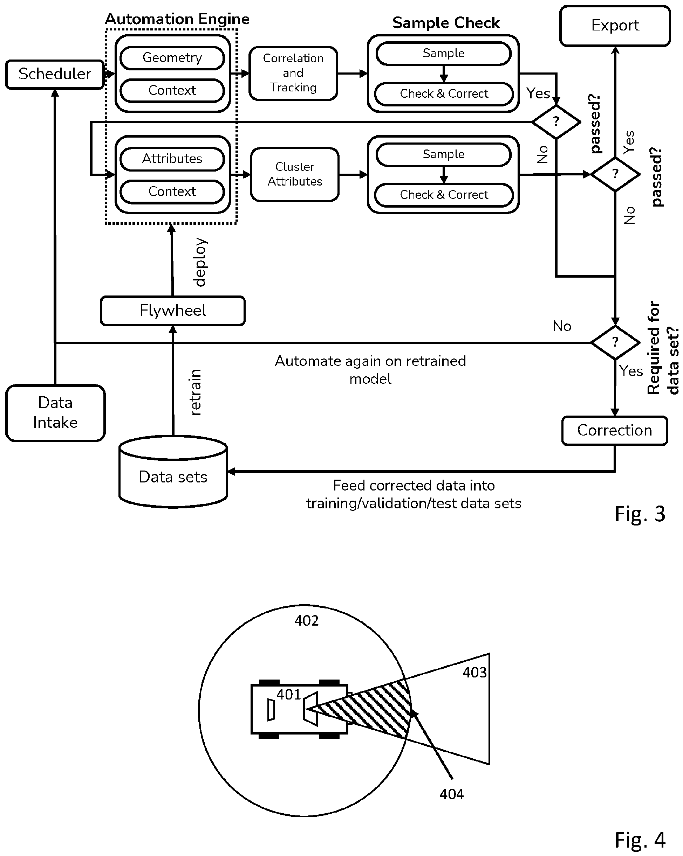

Autonomous vehicles typically use a plurality of different sensors, such as a LIDAR sensor for recording spatial data of the surroundings, and a frontfacing camera for recording images; this setup is schematically indicated in figure 4 showing a top view. In the hatched region 404, where the measuring zones of LIDAR sensor and camera overlap, objects are visible on both sensors. This allows for reducing the annotation effort further: By projecting three-dimensional (3D) bounding boxes from the LIDAR sensor data frames into the cameras image plane, a matching two-dimensional (2D) bounding box can be created for each 3D bounding box. This projection thus creates a link between 2D and 3D annotations of the same object. As a result, object properties determined on the higher resolution camera frames can be transferred to the objects 3D bounding box in the LIDAR data.

For projecting 3D bounding boxes into the image plane, the camera's parameters, in particular its orientation in space, need to be known with sufficient accuracy. An error in the calibration of the camera's orientation leads to an offset between the position of the projected 3D bounding box and the ground truth 2D bounding box. These offsets lead to correction efforts and may in case of a scene with many objects hinder the determination of corresponding 2D and 3D bounding boxes and/or lead to the creation of erroneous links between bounding boxes for different objects. As even small angle errors can lead to significant offsets in projected boxes, many datasets require calibration correction.

The document "OpenCalib: A Multi-sensor Calibration Toolbox for Autonomous Driving" by Guohang Yan et al., arXiv:2205.14087v2 of 30 May 2022, discusses target-based and target-less calibration methods for different sensor combinations. For LIDAR to camera calibration, a method using collected road scene data and specifically linear features such as lane lines is proposed. However, this method may not be applicable for previously collected data that lacks suitable linear features.

Thus, improved methods for calibrating the orientation of a camera in space - or the relative calibration of a camera to a LIDAR sensor - would be useful.

According to a first aspect of the invention, a computer-implemented method for calibrating the relative orientation of a spatial sensor, in particular a LIDAR sensor, and an area sensor, in particular a camera, is provided, wherein the measuring zones of the spatial sensor and the area sensor are overlapping. The method comprises receiving a plurality of sensor frames of the spatial sensor and the area sensor, grouping sensor frames of the spatial sensor with sensor frames of the area sensor based on temporal correlation, selecting at least one group of frames comprising a spatial sensor frame and an area sensor frame, receiving annotations for the sensor frames in the at least one selected group, wherein the annotations comprise bounding boxes for detected objects, projecting the corners of a three-dimensional bounding box in the spatial sensor frame to an image plane of the area sensor, to produce a projected rectangle, calculating an energy term based on the coordinates of the corners of the projected rectangle and the corresponding bounding box in the area sensor frame, and optimizing the relative sensor orientation by minimizing the energy term.

The computer system performing the inventive method may be realized as a single host computer comprising a processor, e.g. a general-purpose microprocessor, a display screen and an input device. Alternatively, the computer system may comprise one or more servers comprising a plurality of processing elements such as processor cores or dedicated accelerators, the servers being connected via a network to a client comprising a display screen and an input device. In this way, the annotation or automation software comprising components for automatic annotation can be partially or fully executed on a remote server, for example in a cloud computing environment, so that only a graphical user interface needs to be executed locally.

A spatial sensor is an imaging sensor that provides spatial information or three-dimensional information, so that sensor frames measured by the spatial sensor comprise 3D coordinates; in particular, the spatial sensor may be a LIDAR sensor or a radar sensor. An area sensor refers to an image sensor that provides two-dimensional information so that sensor frames measured by the area sensor comprise data with only two dimensions; in particular, the area sensor may be a camera.

Temporal correlation of the sensor frames from the spatial sensor with sensor frames from the area sensor is related to the measurement times of the respective sensor. Preferably, sensor frames from different sensors are grouped together when the sensor data frames were recorded within a specified short time interval. Due to this approximate simultaneity of the measurement data from the room sensor and area sensor, objects in the overlapping area of the measurement ranges must be visible on both sensors. For LIDAR sensor data frames or LIDAR point clouds, an average value of the measurement times of the individual points of the LIDAR point cloud can be used as the measurement time of the sensor data frame. Alternatively, the recording time of a camera image can be compared with the start and end time of the LIDAR sensor data frame, whereby in particular a simultaneous recording or a temporal correlation of the sensor data frames is assumed if the recording time of the camera image is between the start and end time of the LIDAR point cloud.

Preferably, projecting at least four corners of a three-dimensional bounding box in the sensor frame of the spatial sensor into the image plane of the area sensor comprises selecting a rectangle. It is useful to choose the largest rectangle obtained from the projection. In particular, all eight points of the 3D bounding box may be projected in the image plane of the area, and the maximum and minimum coordinates for both axes (i.e. maximal x, maximal y, minimal x, minimal y) may be selected and combined for the corners of the projected rectangle.

Preferably, the energy term is calculated as a function of the coordinate differences between the projected rectangle and the corresponding ground truth box of the area sensor. To avoid giving to much weight to big boxes, such as a nearby object, the energy term may be normalized by the area of the projected rectangle or the area of the bounding box; thus for a frame comprising multiple objects, wherein a sum of energy terms is calculated for the objects, all objects contribute in a similar extent to the correction.

The invention is based on the observation that the projection is sensitive to position errors and orientation errors of the area sensor (assuming for simplicity that the space sensor is positioned correctly, so that only misalignment of the area sensor needs to be considered). In particular for wide-angle cameras and generally at the edges of the camera frame, lens distortion may significantly increase the mismatch between projected rectangles and corresponding ground truth bounding box. Even if the camera position is correct, small angular errors of e.g. +-2 degrees can lead to significantly distorted boxes. An advantage of the invention consists in that, because the projected rectangles are compared to two-dimensional bounding boxes, calibration can be performed on any scene that comprises objects.

In an embodiment, the plurality of sensor frames are consecutive sensor frames; a limited number of groups of frames is selected for optimizing the relative sensor orientation. The limited number of groups of frames preferably comprises a fraction of less than 5% of the frames.

Preferably, the selected groups of frames comprise one group at the beginning of the sequence of consecutive frames and one group at the end of the sequence of consecutive frames. The relative orientation of the camera to the vehicle (or rather the LIDAR sensor attached to the vehicle) typically changes slowly, so that checking the calibration at the beginning and end of a video clip or contiguous set of consecutive sensor frames may be sufficient, thus minimizing the computational effort. In an alternative embodiment, the groups of frames are selected based on the scene depicted in the frames fulfills a predefined condition, such as depicting a dangerous maneuver or comprising at least a predefined number of objects.

In an embodiment, the annotations for at least one group of frames are produced by a neural network trained on spatial sensor frames and/or a neural network trained on area sensor frames and/or a human annotator. Properly trained neural networks are capable of high-quality annotations that can be used as ground truth bounding boxes.

In an embodiment, for corner coordinates $x_0$, $y_0$, $x_1$, $y_1$ of the bounding box and for corner coordinates $x_{0'}$, $y_{0'}$, $x_1$, $y_{1'}$ of the corresponding projected rectangle, the energy term is

$$E = \frac{1}{(x_1 - x_0)(y_1 - y_0)} \left( \sqrt{(x_0 - x_{0'})^2 + (y_0 - y_{0'})^2} + \sqrt{(x_1 - x_{1'})^2 + (y_1 - y_{1'})^2} \right).$$

In this energy term, normalizing by the coordinate difference of the bounding box corners and thus the area of the bounding box limits box size effects such as a dominating influence of big boxes. This allows for consistently treating nearby and faraway objects in a single area sensor frame.

In an embodiment, for a group of frames comprising multiple spatial sensor frames and area sensor frames and/or for a group of spatial sensor frame and area sensor frame comprising multiple annotated objects, optimizing the relative sensor orientation is based on the total energy, i.e. the sum of energy term for all annotated objects in the selected group. Preferably, each energy term is normalized by the area of the bounding box corresponding to the respective object.

Preferably, optimizing the relative sensor orientation is performed iteratively until a convergence criterion is met. The converge criterion may e.g. based on the absolute change of the energy value between iterations, wherein no further iterations are performed if the absolute change of the energy value is below a predefined threshold.

In an embodiment, the relative sensor orientation is described using a matrix describing rotation and translation of a sensor in three-dimensional space, and wherein during or subsequent to each optimization iteration, a factorization algorithm is applied to the rotation matrix for ensuring orthonormality. Applying the factorization may be done as postprocessing between optimization iterations, because this reduces the computational effort during the optimization while still maintaining orthonormality of the rotation matrix after each iteration.

Preferably, the intrinsic parameters of the area sensor, in particular the focal length of a camera, are kept constant when optimizing the relative orientation. The intrinsic parameters of the area sensor may be determined from a data sheet or in an independent optimization varying only the intrinsic parameters but keeping orientation and position fixed. This reduces computational effort and avoids reaching false minima in the optimization.

In an embodiment, for data sets comprising additional sensor data, in particular inertial sensor data, additional groups of space sensor frames and area sensor frames are selected based on the acceleration in at least one space axis, in particular the vertical axis surpassing a threshold. If the vehicle experiences an abrupt acceleration, e.g. due to speed bumps or potholes, this may disturb the sensor position and thus cause a need for calibration. The presence of a pothole may be determined via the vertical acceleration surpassing a predefined threshold.

According to a second aspect of the invention, a computer-implemented method for annotating sensor data is provided. The method comprises calibrating the relative orientation of the space sensor and the area sensor using the inventive method, wherein the plurality of sensor frames are consecutive sensor frames, wherein the selected groups of frames represent a fraction, preferably less than 5%, in particular less than 1%, of the received sequence of consecutive frames, and wherein all of the consecutive space sensor frames are labeled, projecting the corners of a three-dimensional bounding box in the space sensor frame to the image plane of the area sensor, to produce a projected rectangle, using the projected rectangle as two-dimensional bounding box in the area sensor frame, and determining at least one attribute of the object. The attribute may be a class of the object and/or a class-dependent status of the object; for instance, activation of an indicator light of a car.

In an embodiment, the plurality of sensor data frames comprise sensor data frames of a spatial sensor, in particular a LIDAR sensor, as well as sensor data frames of at least two area sensors, in particular cameras, wherein the measurement areas of the spatial sensor and the first area sensor spatially overlap in a first overlap area, and wherein the measurement areas of the spatial sensor and the second area sensor spatially overlap in a second overlap area, wherein for objects in the first overlap area, automatic annotation is performed according to the method according to the invention independently of sensor data frames of the second area sensor, and wherein for objects in the second overlap area, automatic annotation is performed according to the method according to the invention independently of sensor data frames of the first area sensor. As a rule, the measuring range of the area sensor comprises the measuring ranges of the various area sensors, so that a reference between the measuring ranges of two area sensors, in particular two cameras, is expediently established via the sensor data frame of the area sensor, in particular the LIDAR sensor. This means that overlapping areas between different area sensors and the room sensor can be evaluated independently of each other.

According to a third aspect of the invention, a non-transitory computer readable medium is provided that comprises instructions which, when executed by a processor of a computer system, cause the computer system to perform a method according to any one of the preceding claims.

According to a fourth aspect of the invention, a computer system is provided that comprises a host computer, the host computer comprising a processor, a working memory, a display, an input device and a non-volatile memory, the non-volatile memory comprising instructions which, when executed by the processor, cause the computer system to perform a method according to any one of the preceding claims.

The processor may be a general-purpose microprocessor commonly used as the central processing unit of a personal computer, or it may comprise one or a plurality of processing elements configured to perform specialized computations, such as a graphics processor. In alternative embodiments of the invention, the processor may be replaced or supplemented by a programmable logic device, such as an FPGA configured to provide a fixed set of functions, and/or may comprise an IP core microprocessor.

The invention is explained in more detail below with reference to the drawings. Here, similar parts are labeled with identical designations. The embodiments shown are highly schematized, i.e. the distances and the lateral and vertical dimensions are not to scale and, unless otherwise indicated, do not have any derivable geometric relationships to one another.

In the drawings:

Figure 1    shows an exemplary embodiment of a computer system,

Figure 2    shows an example of an area sensor data frame with a schematic diagram of possible data points in the insertion at the top left,

Figure 3    shows a schematic diagram of an automation system for performing a method for annotating sensor data,

Figure 4    shows a schematic diagram of a vehicle with overlapping measurement ranges of two sensors,

Figure 5    shows a schematic diagram of a method for optimizing an area sensor calibration according to the invention,

Figure 6    shows an exemplary diagram of the bounding boxes for an area sensor data frame compared to the projected rectangles,

Figure 7    shows an exemplary diagram of the bounding boxes for an area sensor data frame compared to the projected rectangles after correction, and

Figure 8    shows a diagram of the distribution of Intersection over Union scores for an exemplary set of consecutive sensor data frames.

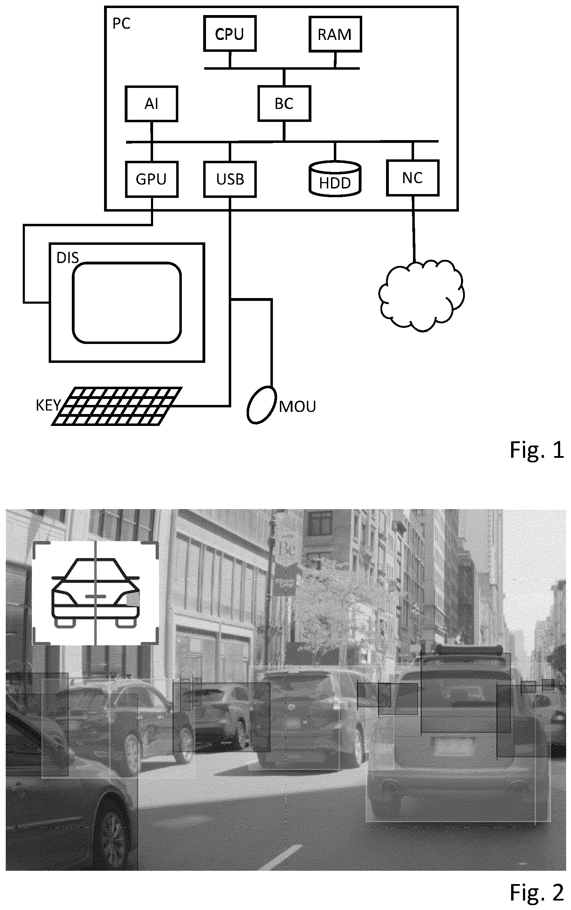

Fig. 1 illustrates an exemplary embodiment of a computer system.

The embodiment shown comprises a host computer PC having a display DIS and human interface devices such as a keyboard KEY and a mouse MOU; furthermore, an external server may be connected via a network, as indicated by a cloud symbol.

The host computer PC comprises at least one processor CPU having one or multiple cores, a main memory RAM, and a number of devices connected to a local bus (such as PCI Express), which exchanges data with the CPU via a bus controller BC. The devices comprise e.g., a graphics processing unit GPU for driving the display, a controller USB for attaching peripherals, a non-volatile memory HDD such as a hard disk or a solid-state disk, and a network interface NC. Additionally, the host computer may comprise a dedicated accelerator AI for neural networks. The accelerator may be implemented as a programmable logic device such as an FPGA, as a graphics processing unit suitable for general calculations, or as an application-specific integrated circuit. Preferably, the non-volatile memory comprises instructions that, when executed by one or more cores of the processor CPU, cause the computer system to carry out a method according to the invention.

In alternative embodiments, indicated as a cloud in the figure, the host computer may comprise one or more servers comprising one or more processing elements, the servers being connected, via a network, to a client comprising a display device and an input device. Thus, the annotation environment may be executed partially or completely on a remote server, such as in a cloud computing setup. A personal computer may be used as a client which comprises a display device and an input device via a network. Alternatively, a graphical user interface of the annotation environment may be displayed on a portable computer system, in particular a smartphone or a tablet having a touchscreen user interface.

Fig. 2 shows a camera image as an exemplary sensor data frame with a schematic diagram of possible data points in the slot at the top left.

The photo of a city scene shown in the figure can be a single image from an area sensor or part of a video recording. In general, a recording provided by a customer may include sensor data frames that represent a sequential context, such as five minutes of driving, recorded via imaging sensors such as a camera and a LiDAR sensor. Video recordings could, for example, consist of a series of consecutive frames, which in turn contain a series of objects. At least one neural network is used to process the recording in order to create annotations. Annotations may comprise a plurality of data points, each data point describing a specific aspect.

A data point is a parameter that describes a specific property of a recording and can be applied to all levels of detail. Levels of detail can be the entire recording, a series of consecutive or random frames, a single frame or an object on a frame. A specific example would be an annotation for a car consisting of a bounding box describing the position of the car within a certain accuracy, a vertical line marking an edge of the car, a classification to describe the type of the car, attributes for cut-off or occlusion, turn signals, brake lights, color and so on. In the context of the present invention, it is advantageous to distinguish between bounding boxes as primary data points, which describe the presence (but also the coordinates) of an object, and secondary data points, which describe properties of an existing object more precisely as object attributes. In principle, secondary data points can be the class of an object, the activation of a blinker and/or brake light, colors, subclasses, tracking information, degree of occlusion, degree of truncation, complex classes that describe the relevance of an object/frame/clip, sound, text or any other information that can be determined automatically. Only if an object is present, i.e. at least one primary data point is available, can an annotation with secondary data points take place.

The inset at the top left of the figure shows various data points for a car in the sensor data frame of an area sensor. Cars can be of different types, e.g. a delivery van, an SUV or a sports car. The position or rather the dimensions of a car are generally indicated by a bounding box, i.e. a rectangular frame or cuboid that encloses the car. Vertical lines indicate the boundaries of the car or allow a better suggestion of the car's pose. Another possible data point for a car is the activation of an indicator light, such as the direction indicator or turn signal shown in the inset.

A number of cars are present in the frame, each enclosed by a bounding box. Cars may be fully visible, such as the one directly in front of the camera, or they may be obscured. The traffic density of the urban scene can affect the annotation quality, for example by making it difficult to accurately determine the boundaries of the boundary box due to occlusion.

FIG. 3 shows a schematic diagram of an automation system for annotating sensor data frames. The automation system implements various annotation steps in dedicated components and is well suited for execution in a cloud computing environment.

In a first component, "Data Intake", unsorted recordings are received from a customer. The recordings can be normalized, e.g. split into sensor data frames or images, to enable uniform processing. This component may also include an enrichment phase in which the sensor data frames of the recordings are automatically enriched with metadata relevant for measuring automation quality. For example, each image can be assigned the geographical location where it was captured, in particular based on the GPS coordinates received at the same time as the images. In the context of autonomous driving, metadata or condition parameters relevant to the quality of the annotation could include a weather condition, a road type, a lighting condition and/or a time of day. For automation efficiency, it is useful to process batches of frames or individual images together in the following steps or components.

In a second component, the "Scheduler", different batches of sensor data frames or individual images are scheduled for annotation by an automation engine. The scheduler can select one or more automation modules to annotate the frames with one or more data points for execution by the automation engine. Furthermore, the scheduler can select the batch of frames to be processed based on the availability of new versions of automation modules. An automation module can generate a single data point, such as a vertical line, or multiple associated data points, such as the coordinates of a bounding box and an object class. The automation modules may be neural networks or other machine learning based technology that learns from data samples in a supervised, semi-supervised or unsupervised manner.

In a third component, the "Automation Engine", a batch of sensor data frames is processed by at least one automation module that assigns annotations to the frames. The automation system can run different automation modules to create different annotations or data points. Preferably, the data points are provided with metadata describing the version of the automation module used; the automation system may store the data points and associated metadata in one or more databases. Some of the state attributes associated with a data point can be determined by a dedicated automation component. The "context", i.e. the state attributes for a data point, may include attributes that are themselves a data point. For example, the accuracy of the placement of a vertical line may depend on the size of the bounding box in which the line is to be drawn.

First, at least one automation component is executed for object detection, which generates bounding boxes around detected objects and thus determines the "Geometry" of the objects. By calibrating the relative orientation of an area sensor, such as a camera, to a spatial sensor, in particular a LIDAR sensor, groups of sensor data frames for both sensors can be processed together in an automation module. This allows for reducing the computational effort compared to using independent automation modules for detecting objects and determining bounding boxes in the sensor data frames of individual sensors. Different regions of the sensor data frames may be processed by different automation modules, depending on which regions of the sensor frames correspond to overlapping measuring zones of the sensors.

Figure 4 shows a schematic diagram of a vehicle with overlapping measurement zones of two sensors. In the diagram shown from a bird's eye view, a vehicle 401 oriented to the right can be seen, which has a spatial sensor, such as a LIDAR sensor, and an area sensor, such as a camera. The measuring zone 402 of the spatial sensor covers the entire surroundings of the vehicle, i.e. an angle of 360 degrees is swept, but the range of a LIDAR sensor is limited by the maximum permissible emitted pulse energy and the sensitivity of the sensor to backscattered light. The measuring zone 403 of the area sensor is a cone pointing to the right, whereby the maximum distance at which an object can be recognized may depend on the currently prevailing light conditions. The method according to the invention can be applied to objects in the overlap region 404 of the spatial sensor and the area sensor. This covers the direction of travel of the vehicle and thus the most important region for driving functions.

Returning to figure 3, a "Correlation and Tracking" component is then executed, whereby objects are first tracked between successive frames of the spatial sensor and objects are tracked between successive frames of the area sensor. When tracking objects, a temporal context is considered to check the plausibility of bounding boxes. Objects must move according to kinematic laws and cannot simply disappear without, for example, having reached the edge of the sensor's measuring range (or being obscured by a closer object, which is then visible in the sensor data frame).

A "Sample Check" component is then carried out, in which a sample of data points, in particular bounding boxes, are checked for correctness. For this purpose, bounding boxes are selected for quality control in a first phase, "Sample", based on sampling requirements. In a second phase, "Check and Correct", a human inspector can be shown the frame with any existing bounding boxes. The inspector may be asked if the bounding box is correct and may be shown a user interface to adjust the bounding box and/or add a bounding box in case of false negatives.

In a next step, sample check "passed?", the system determines whether the quality measure of the sample was above a predefined threshold (indicating sufficient annotation quality). If the automation system determines that this is the case (Yes), object attributes can be determined for the recognized objects. If this was not the case (No), the evaluation of the batch of sensor data frames is postponed until a retrained automation component is available. For this purpose, the corrected sensor data frames can be used and/or an additional correction of sensor data frames can be performed in order to obtain a sufficient amount of training data. The execution continues with a "Required for data set?" check to determine whether the corrected data or additional data should be used for retraining the automation component concerned for object recognition.

If the quality check is passed, the automation engine executes at least one automation module to determine object attributes. In addition, a "context" can usefully be determined from status parameters. The status parameters can be recording conditions, such as a recording location or lighting conditions, but also other data points, such as the size of the bounding box or the object. Since object attributes are often only determined from sensor data frames of an environment sensor, especially the area sensor or the camera, parameters relevant to this sensor in particular can have an influence on the quality of the object attributes.

In a further step, "clustering", the individual data points or object attributes of a specific type are grouped based on status parameters. It may be necessary to assign certain status parameters to a type of data point. The status parameters for the accuracy of the coordinates of bounding boxes can include, for example, the size of the bounding box, the time of day and/or the weather conditions when the image was taken and/or partial occlusion of the object. The values of the state parameters of the individual object attributes can form several clusters in the multidimensional space spanned by the state parameters. Different clusters may be associated with a different quality of annotations.

Based on a large number of individual data points or object attributes of the same type, the automation system can thus determine clusters in a multidimensional space, in particular using a nearest neighbor algorithm and/or an unsupervised learning approach and/or a machine learning classification model. The determined clusters can be analyzed to determine a criterion for grouping data points and/or predicting the annotation quality by defining value ranges for at least one of the state parameters of the data point.

Preferably, the grouping is performed on the basis of defined value ranges for several state parameters; it can also be performed on the basis of value ranges by a neural network or a machine learning classification model.

In a "sample check" component, quality control is carried out for a sample of object attributes or data points. In a first phase, "sampling", several data points are selected for quality control on the basis of sampling requirements. The frequency and/or size of samples taken for a group of data points may be chosen depending on the predicted quality of the data points in the group; data points associated with condition attributes that indicate poor quality may be sampled more frequently. In a second phase, "Check and Correct", a human inspector can be shown the frame with appropriate annotations and a user interface to enter corrections. The automation system determines a quality measure from the type and number of corrections made by the human inspector.

In a next step, sample check "passed?", the system determines whether the quality measure of the sample was above a predefined threshold (indicating sufficient annotation quality). If the automation system determines that this is the case (Yes), the group of sensor data frames comprising the selected sample can be exported and delivered to the customer. If this was not the case (No), the execution is continued in a further step to improve the automation components.

The next step, "Required for data set?", determines whether the manually corrected sample should be used to retrain the automation component for the data point or object attribute. Whether this is the case may depend on how many images were taken under the same conditions that were already used to train the model. If this is not the case (No), the group of data points from which the sample was taken is sent back to the scheduler (Automate again with retrained model). As soon as a newly trained automation component is available for the data points, the scheduler sends the group of data points to the automation engine for processing again. If the corrected samples are to be used for retraining (Yes), the manually annotated data points are fed into the training/validation or test datasets for the respective neural network/automation module. These data sets are represented by a cylinder. In addition, further sensor data frames can be manually annotated in a "correction" step in order to obtain further training data. During correction, it is expedient to manually annotate a subset of the group of sensor data frames and use the corrected data for retraining the neural network by feeding it into the training, validation or test data sets.

In a further component, the "flywheel", the neural network or the automation module that generated the data points rejected during the random check is retrained. The quality of the automation is improved by retraining the neural network. Preferably, the automation components are improved to such an extent that manual checking is no longer required for as many clusters as possible. The iteration times for retraining should be as short as possible to enable a rapid improvement in efficiency.

Flywheel includes techniques for efficiently storing and versioning training datasets for each automation module or type of data point, monitoring changes to the training datasets, and automatically triggering retraining when predefined or automatically determined thresholds for changes to the training datasets are exceeded (e.g., a predefined number of new examples). Flywheel also includes techniques for automatically deploying retrained neural networks in automation components and informing the scheduler of version changes.

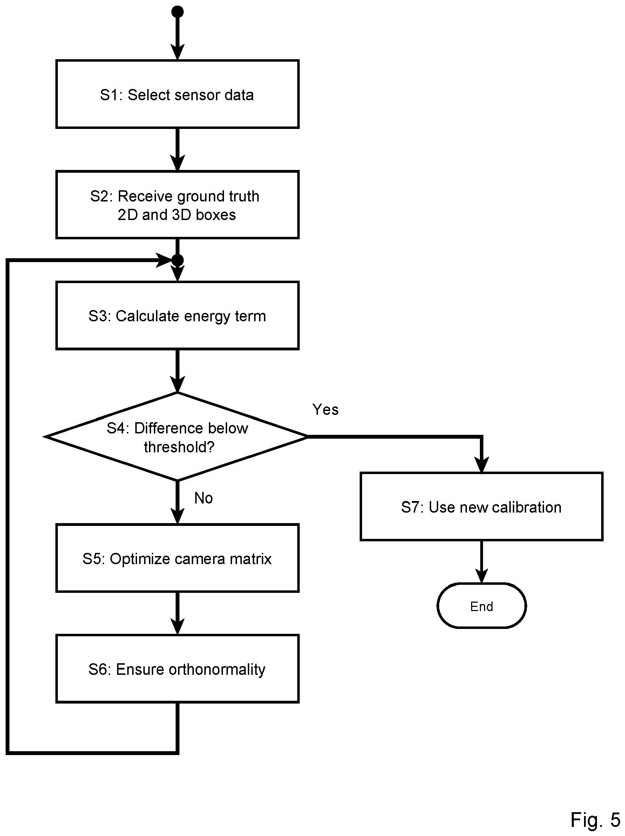

Figure 5 shows a schematic diagram of a method for optimizing an area sensor calibration according to the invention. To allow for combined processing of spatial sensor data such as a LIDAR point cloud and area sensor data such as camera images, the present invention proposes a method for calibrating the relative orientation of an area sensor to a spatial sensor. This new approach is based on the observation that the projection quality is linked to the camera's calibration accuracy. A typical camera calibration is described by a group of parameters containing information regarding the camera's position in space, rotation, focal length, etc. Errors in these parameters, especially a rotation angle that is off by a few degrees, can quickly lead to significant projection offsets.

In step S1 (Select sensor data), sensor data frames, in particular LIDAR point clouds and camera images, from different sensors are grouped together when the sensor data frames were recorded within a specified short time interval, such as e.g. 20 ms. For a longer consecutive clip of sensor data frames, groups of frames at the beginning and the end of the consecutive clip may be chosen. As a result, quality annotations are available for a subset of a clip's frames, with 2D and 3D annotations being linked between one another.

In step S2 (Receive ground truth 2D and 3D boxes), ground truth bounding boxes for the spatial sensor (3D bounding boxes) and area sensor (2D bounding boxes) are received. The camera calibration is calibrated relying on the quality of these ground truth boxes. The ground truth boxes can be generated using dedicated neural networks trained for 2D images and 3D point clouds, or they can be received via human annotators. A corrected calibration should make projected boxes from the 3D space be as close as possible to their 2D counterpart.

In step S3 (Calculate energy term), a projection energy is calculated as a function of the overlap between the 2D bounding boxes and projected rectangles based on the 3D bounding boxes.

A typical camera projection from the 3D world space to the 2D image space is done through formula (1):

$$x_p = I * E * W * x$$

In the formula, $x$ denotes the point in world coordinates to project, and $x_p$ is the projected 2D point. $W$ denotes the world to reference matrix, that is frame-dependent but not linked to the quality of the camera, and thus remains constant through the process. The reference matrix can e.g. be determined based on the trajectory of the ego vehicle (which may be detemined based on GPS coordinates.

The matrix $I$ is called the intrinsics matrix of the camera; it is a 3x3 matrix containing 4 parameters describing the focal length of the camera and the coordinates of the center pixel. The intrinsics parameters can easily be determined with high accuracy, as they are constant for a camera and often known from a data sheet. Because including these parameters in the optimization would mean longer optimization times as well as more potential for overfitting on the input data, it is preferable to keep them at their initial values. However, the intrinsics parameters can also optimized in embodiments of the invention (e.g. if no data sheet is available).

E denotes the extrinsics matrix of the camera; it is a 4x4 transformation matrix describing the translation and rotation of the camera in 3D space. These extrinsic parameters may different from clip to clip and are directly detrimental to projection quality when subject to errors. When optimizing the energy function, improved values for the elements of $E$ are determined. In embodiments of the invention, both $E$ and $I$ may be optimized.

Using formula (1) to project the 8 corners of every 3D bounding box in the 2D image plane of the camera. Then, the maximum and minimum of these points are taken on both the x and y axes to produce a projected rectangle. This rectangle is defined by the coordinates $x'_0, y'_0, x'_1, y'_1$, which respectively represented the minimum coordinate of the projected bounding box on the x- and y- axes, and the maximum coordinates on the same axes. Due to the correlation between 3D and 2D sensor signals, a ground-truth 2D box defined by the coordinates $x_0, y_0, x_1, y_1$ corresponds to the projected rectangle. The more accurate the projection, the closer the coordinates of the projected box and of the ground-truth box should be. Based on these coordinated, a projection energy, i.e. an energy function for the accuracy of the projection, is formulated for a pair of projected rectangle and ground-truth bounding box as given by formula (2):

$$E_x = \frac{1}{A_x} \left( \sqrt{(x_0 - x'_0)^2 + (y_0 - y'_0)^2} + \sqrt{(x_1 - x'_1)^2 + (y_1 - y'_1)^2} \right)$$

Here $A_x$ denotes the surface area of the ground-truth box. For more than one object, i.e. more than one corresponding pair of bounding box and rectangle, the total projection energy is the sum of the projection energy for all annotated bounding boxes (i.e. the number of objects) on the selected frames as given by formula (3):

$$E = \sum^x E_x$$

For multiple pairs of spatial sensor data frames (LIDAR frames) and corresponding area sensor frames (camera images), the sum of the total projection energy of the different frames may be used as energy function for the optimization, thus optimizing for the selected batch of frame pairs.

In step S4 (Difference below threshold?), the total projection energy calculated in the current iteration is compared to the total projection energy of the previous iteration. Initially, no projection error (i.e. a total projection energy of zero) is assumed, so that at least one iteration of optimization is performed. The optimization process is conducted until convergence, i.e. when changes in the total projection energy diminish below a predetermined threshold. When this is the case, the values of the elements in the extrinsics matrix allow for obtaining the calibration parameters. In step S7 (Use new calibration), the sensor data frames can be annotated using the newly determined calibration parameters, and the optimization method is stopped. When the difference in total projection energy is not yet below threshold, execution continues with a new optimization iteration in step S5.

In step S5 (Optimize camera matrix), an optimization of the total projection energy by find a corrected calibration that optimizes the projection quality of the selected annotations. This optimization is done through an energyminimization approach of the energy function. The optimization aims at finding extrinsic parameters for the camera that minimize the total projection energy. Thus, improved values for the 12 parameters of the extrinsics matrix need to be determined. In an embodiment, the intrinsics is also optimized, resulting in 4 additional parameters to be improved. For performing the optimization, optimization functions available in libraries such as the *scipy* Python library may be used (in particular, the BFGS solver). As initialization points for the input variables, we use the initial calibration matrices present on the clip. The initial calibration matrices may be determined based on a nominal camera position and angle; they are suitable for starting the optimization, but typically not accurate.

In step S6 (Ensure orthonormality), a postprocessing step is performed after each optimization iteration in order to ensure that the extrinsics matrix is correct: The extrinsics matrix comprises a translation and a rotation matrix, with the latter needing to be orthonormal. Thus, a QR factorization of the rotation matrix is perfomed: this process decomposes the rotation matrix $R$ into two matrices so that $R = Q * D$, with $Q$ being orthonormal. For projecting the boxes during the optimization step, an extrinsics matrix with $Q$ as its rotation component is used. This needs to be done at every step of the optimization process on the provided extrinsics matrix, to ensure that its rotation matrix always respects the orthonormality property. Performing the QR factorization as postprocessing, instead of as a constraint during the optimization, is computationally more efficient. After ensuring orthonormality of the rotation matrix, execution continues in step S3.

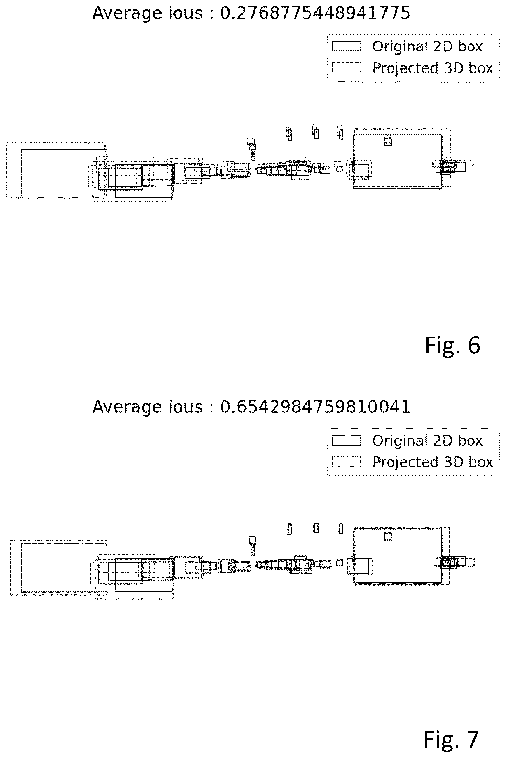

Figure 6 shows an exemplary diagram of the bounding boxes for an area sensor data frame (camera image) compared to the projected rectangles prior to correction. Ground truth bounding boxes (Original 2D boxes) are shown as full lines, whereas projected rectangles (Projected 3D box) are shown as dotted lines. For clarity, the camera image comprising the objects was omitted. To measure the overlap between ground truth bounding box and projected rectangle, the intersection over union (IoU) was calculated for each object; an IoU of 100% denotes a perfect match. On average, an IoU of 27,69 % was observed.

Figure 7 shows an exemplary diagram of the bounding boxes for the same area sensor data frame (camera image) as in figure 6 compared to the projected rectangles after correction. Ground truth bounding boxes (Original 2D boxes) are shown as full lines, whereas projected rectangles (Projected 3D box) are shown as dotted lines. For clarity, the camera image comprising the objects was omitted. To measure the overlap between ground truth bounding box and projected rectangle, the intersection over union (IoU) was calculated for each object; an IoU of 100% denotes a perfect match. On average, an IoU of 65,43 % was observed. Thus, the quality metric was more than doubled by the optimization.

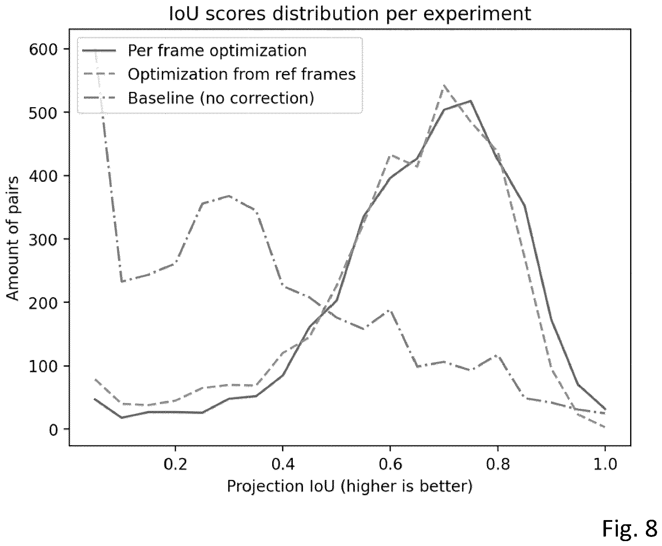

Figure 8 shows a diagram of the distribution of Intersection over Union (IoU) scores for an exemplary set of consecutive sensor data frames. In the diagram, the distribution of overlap measurements (Projection IoU) for boxes on all clips, the inventive method was tested on. The baseline (no correction), shown as dash-dotted line, is highly concentrated at low/null overlap, close to 0. The dashed line shows results of a correction based on reference frames, and in the full line shows results of a correction per-frame. Per-frame correction results in best performance, where the calibration is optimized on each frame separately. While this provides the best results, it is computationally expensive, and doesn't have direct applicability: As the camera stays fixed relative to the vehicle, a clip only has one calibration through its duration (in the absence of speed bumps).

The inventive method led to a significant and reliable increase in the quality of projection on the clips: While the median overlap of boxes without correction is of 28.6%, it reached 63.8% with the corrected calibration. An interesting insight is that both these distributions are very close: correcting based on a small subset of frames provides only marginally inferior correction compared to the best measured per-frame performance. In the experiments, usually no more than 3 annotated frames where need to reach near-perfect calibration, with additional frames resulting in only moderate improvements. Thus, it is advantageous to select a few frames of a clip and provide them with ground-truth annotations, correct the calibration based on these objects, and then annotate the rest of the clip with an improved calibration.

Overall, the inventive method allows for significant improvements in the projection's quality and thus in the quality of the annotations.

**Claims**

1. Computer-implemented method for calibrating the relative orientation of a spatial sensor, in particular a LIDAR sensor, and an area sensor, in particular a camera, wherein the measuring zones of the spatial sensor and the area sensor are overlapping, the method comprising

   • Receiving a plurality of sensor frames of the spatial sensor and the area sensor,
   • Grouping sensor frames of the spatial sensor with sensor frames of the area sensor based on temporal correlation,
   • Selecting at least one group of frames comprising a spatial sensor frame and an area sensor frame,
   • Receiving annotations for the sensor frames in the at least one selected group, wherein the annotations comprise bounding boxes for detected objects,
   • Projecting the corners of a three-dimensional bounding box in the spatial sensor frame to an image plane of the area sensor, to produce a projected rectangle,
   • Calculating an energy term based on the coordinates of the corners of the projected rectangle and the corresponding bounding box in the area sensor frame, and
   • Optimizing the relative sensor orientation by minimizing the energy term.

2. Method according to claim 1, wherein the plurality of sensor frames are consecutive, and wherein a limited number of groups of frames is selected for optimizing the relative sensor orientation.

3. Method according to claim 2, wherein the selected groups of frames comprise one group at the beginning of the sequence of consecutive frames and one group at the end of the sequence of consecutive frames.

4. Method according to any preceding claim, wherein the annotations for at least one group of frames are produced by a neural network trained on spatial sensor frames and/or a neural network trained on area sensor frames and/or a human annotator.

5. Method according to any preceding claim, wherein for corner coordinates $x_0$, $y_0$, $x_1$, $y_1$ of the bounding box and for corner coordinates $x_{0'}$, $y_{0'}$, $x_{1'}$, $y_{1'}$ of the corresponding projected rectangle, the energy term is

$$E = \frac{1}{(x_1 - x_0)(y_1 - y_0)} \left( \sqrt{(x_0 - x_{0'})^2 + (y_0 - y_{0'})^2} + \sqrt{(x_1 - x_{1'})^2 + (y_1 - y_{1'})^2} \right).$$

6. The method of claim 4, wherein for a group of frames comprising multiple spatial sensor frames and area sensor frames and/or for a group of spatial sensor frame and area sensor frame comprising multiple annotated objects, optimizing the relative sensor orientation is based on the total energy, i.e. the sum of energy term for all annotated objects in the selected group.

7. Method according to any preceding claim, wherein optimizing the relative sensor orientation is performed iteratively until a convergence criterion is met.

8. The method of claim 6, wherein the relative sensor orientation is described using a matrix describing rotation and translation of a sensor in three-dimensional space, and wherein during or subsequent to each optimization iteration, a factorization algorithm is applied to the rotation matrix for ensuring orthonormality.

9. The method of claim 6 or 7, wherein the intrinsic parameters of the area sensor, in particular the focal length of a camera, are kept constant when optimizing the relative orientation.

10. Method according to any preceding claim, wherein for data sets comprising additional sensor data, in particular inertial sensor data, additional groups of spatial sensor frames and area sensor frames are selected based on the acceleration in at least one space axis, in particular the vertical axis surpassing a threshold.

11. Computer-implemented method for annotating sensor data, the method comprising calibrating the relative orientation of the spatial sensor and the area sensor using a method according to any of the preceding claims, wherein the plurality of sensor frames are consecutive sensor frames, wherein the selected groups of frames represent a fraction, preferably less than 5%, in particular less than 1%, of the received sequence of consecutive frames, and wherein all of the consecutive spatial sensor frames are labeled, projecting the corners of a three-dimensional bounding box in the space sensor frame to the image plane of the area sensor, to produce a projected rectangle, using the projected rectangle as two-dimensional bounding box in the area sensor frame, and determining at least one attribute of the object.

12. Non-transitory computer readable medium comprising instructions which, when executed by a processor of a computer system, cause the computer system to perform a method according to any one of the preceding claims.

13. Computer system comprising a host computer, the host computer comprising a processor, a working memory, a display, an input device and a non-volatile memory, the non-volatile memory comprising instructions which, when executed by the processor, cause the computer system to perform a method according to any one of the preceding claims.

Fig. 1

Fig. 2

Fig. 3

Fig. 4

S1: Select sensor data

S2: Receive ground truth
2D and 3D boxes

S3: Calculate energy term

S4: Difference below
threshold?

Yes

No

S5: Optimize camera matrix

S7: Use new calibration

End

S6: Ensure orthonormality

Fig. 5

Average ious : 0.2768775448941775

Original 2D box
Projected 3D box

Fig. 6

Average ious : 0.6542984759810041

Original 2D box
Projected 3D box

Fig. 7

Fig. 8

Europäisches
Patentamt

European
Patent Office

Office européen
des brevets

## EUROPEAN SEARCH REPORT

**Application Number**

EP 24 18 7987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/007184 A1 (DEEPMAP INC [US]) 14 January 2021 (2021-01-14) <br> * page 22, line 18 - line 22 * <br> * page 24, line 18 - line 21 * <br> * page 25, line 4 - line 8 * <br> * page 34, line 7 - line 18 * <br> * page 35, line 4 - line 12 * <br> * page 49, line 15 - line 25 * <br> * page 58, line 8 - line 15 * <br> ----- | 1-13 | INV. <br> G01S7/497 <br> G01S17/86 <br> G01S17/931 <br> G06N5/00 |
| Y | US 10 838 049 B1 (SCHWIESOW MICHAEL B [US]) 17 November 2020 (2020-11-17) <br> * column 12, line 56 - column 13, line 22 * <br> ----- | 1-13 | |
| Y | HYUNGGI CHO ET AL: "A multi-sensor fusion system for moving object detection and tracking in urban driving environments", 2014 IEEE INTERNATIONAL CONFERENCE ON ROBOTICS AND AUTOMATION (ICRA), 1 May 2014 (2014-05-01), pages 1836-1843, XP055573629, DOI: 10.1109/ICRA.2014.6907100 ISBN: 978-1-4799-3685-4 * Chapter C. Movement Classification; page 1841 * <br> ----- <br> -/-- | 10 | |

| | |
|---|---|
| | TECHNICAL FIELDS SEARCHED (IPC) |
| | G01S <br> G06N |

The present search report has been drawn up for all claims

| Place of search | Date of completion of the search | Examiner |
|---|---|---|
| Munich | 6 March 2025 | Töpfer, Nils-Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 18 7987

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIN CHUNMIAN ET AL: "3D-DFM: Anchor-Free Multimodal 3-D Object Detection With Dynamic Fusion Module for Autonomous Driving", IEEE TRANSACTIONS ON NEURAL NETWORKS AND LEARNING SYSTEMS, IEEE, USA, vol. 34, no. 12, 1 December 2023 (2023-12-01), pages 10812-10822, XP011954508, ISSN: 2162-237X, DOI: 10.1109/TNNLS.2022.3171553 [retrieved on 2022-05-13] * Chapter C. Box Optimization in Object Detection; page 10815 * | 5 | |
| Y | WO 2021/202794 A1 (FLIR DETECTION INC [US]) 7 October 2021 (2021-10-07) * page 5, line 28 - line 34 * * page 13, line 13 - page 14, line 7 * | 4,6,8,9 | |
| | | | TECHNICAL FIELDS SEARCHED (IPC) |

The present search report has been drawn up for all claims

| Place of search | Date of completion of the search | Examiner |
|---|---|---|
| Munich | 6 March 2025 | Töpfer, Nils-Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 18 7987

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

Application Number

EP 24 18 7987

The Search Division considers that the present European patent application does not comply with the requirements of unity of invention and relates to several inventions or groups of inventions, namely:

     1. claims: 1-3, 5, 7, 10, 12, 13(completely); 9(partially)

         A method for extrinsic calibration of a sensor fusion system
               ---

     2. claims: 4, 6, 8, 11(completely); 9(partially)

         A method for annotating sensor data
               ---

## ANNEX TO THE EUROPEAN SEARCH REPORT
## ON EUROPEAN PATENT APPLICATION NO.

EP 24 18 7987

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2025

| Patent document cited in search report | | Publication date | Patent family member(s) | | Publication date |
|---|---|---|---|---|---|
| WO 2021007184 | A1 | 14-01-2021 | US | 2021003684 A1 | 07-01-2021 |
| | | | US | 2021003712 A1 | 07-01-2021 |
| | | | US | 2021004610 A1 | 07-01-2021 |
| | | | WO | 2021007184 A1 | 14-01-2021 |
| US 10838049 | B1 | 17-11-2020 | NONE | | |
| WO 2021202794 | A1 | 07-10-2021 | EP | 4128028 A1 | 08-02-2023 |
| | | | US | 2023028196 A1 | 26-01-2023 |
| | | | WO | 2021202794 A1 | 07-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023135244 A1

**Non-patent literature cited in the description**

- **GUOHANG YAN et al.** OpenCalib: A Multi-sensor Calibration Toolbox for Autonomous Driving. *arXiv:2205.14087v2*, 30 May 2022